# EUROPEAN PATENT SPECIFICATION

(11) **EP 0 540 324 B1**
(45) Date of publication and mention of the grant of the patent: **30.12.1998**
(21) Application number: 92309902.2
(22) Date of filing: 29.10.1992
(51) Int. Cl.: H01M 12/02, H01M 2/12, H01M 12/06

(54) **Air-assisted alkaline cells and a seal assembly therefor**
Von Luft gestützte alkalische Zellen und dazugehörige Dichtungsanordnung
Cellules alcalinés assistées par l'air et un dispositif d'étanchéité pour celles-ci

(30) Priority: 29.10.1991 US 784337
(43) Date of publication of application: 05.05.1993
(73) Proprietor: EVEREADY BATTERY COMPANY, INC., St. Louis Missouri 63164 (US)
(72) Inventor: Hyland, Robert James, Bay Village, OH 44140 (US)
(74) Representative: Tubby, David George

(56) References cited:
- EP-A- 0 182 596
- EP-A- 0 441 592
- FR-A- 1 064 629
- US-A- 3 741 812
- US-A- 4 066 822

## Description

The present invention relates to air-assisted alkaline cells having an improved seal assembly.

Alkaline cells are well known in the art, and they typically include a zinc anode, manganese dioxide as the cathode and an aqueous solution of potassium hydroxide for the electrolyte. These cells are commercially available for use both in industry and in the home. A new type of alkaline cell has, however, recently been disclosed by the Spanish Company, Cegasa International. The new cell, which is referred to as an air-assisted cell, is designed to use oxygen in the air to "re-charge" the cathode. The cell employs the same basic components as the conventional alkaline cell, but it is designed so that the positive electrode containing the manganese dioxide (MnO₂) is supported about its periphery and along its full length in the cell by a perforated ribbed air distribution grid. The bottom or negative end of the cell then has an insulating support which allows air to enter the cell and pass up along the outside of the supported positive electrode.

When the air-assisted cell is put into a circuit, the electrochemical reaction depends primarily upon the presence of the manganese dioxide cathode. As the reaction progresses, and the manganese dioxide cathode is electrochemically reduced, air within the cell re-oxidizes and re-charges the manganese dioxide. This re-charging of the manganese dioxide means that the fixed quantity of manganese dioxide in the cathode may be discharged and then re-charged numerous times, and thus that the quantity of manganese dioxide in the cathode is not limiting upon the lifetime of the cell.

During discharge of an air-assisted cell, the manganese dioxide in the cathode is reduced to a lower oxidation state. The discharged active manganese dioxide cathode then undergoes a reaction with the air which is already in, or which enters, the cell to re-oxidize the reduced cathode such that the cathode becomes re-charged. The oxygen in the air will spontaneously restore or regenerate the higher oxidation state over a period of time. If the cell is subjected to brief periods of high rate discharge, it must then be rested for substantial periods of time between each discharge to enable the MnO₂ to be completely re-charged. However, if the cell is continuously discharged at a rate which is less than the rate at which the MnO₂ is re-charged by the incoming air, then the air re-charges the MnO₂ as quickly as it is discharged. In other words, regardless of the rate at which the cell is discharged, if the cell is drained at a low rate or is rested for a sufficient period of time, then the ability of the cathode to be re-charged is limited only by its access to air. The cathode material is regenerated without involving the zinc anode material which is oxidized during the discharge but cannot be regenerated during a rest period. In view of this, less cathode material needs to be added to an air-assisted alkaline cell and, in turn, the volume of zinc may be increased in the cell to increase the overall capacity of the cell, without increasing the overall volume of the cell.

In contrast to air-assisted alkaline cells, the ampere hour output of a cathode in a standard alkaline battery is limited by the quantity of manganese dioxide incorporated in the cell when the cell is manufactured. Thus, in a conventional alkaline cell and in an air-assisted cell of comparable size, the two cells having the same ampere hour input for the cathode, the maximum service which is obtainable is greater for the air-assisted cell than for the standard alkaline cell.

In order for an air-assisted cell to function, however, it is essential that oxygen be allowed to access the cell. Generally, this has been achieved by designing a portion of the battery, such as the seal, to allow oxygen to flow through and contact the cathode directly. Contrary to this, the seal in standard alkaline cells is designed to be air tight.

When designing such a seal, however, consideration must also be given to the prevention of the ingress and/or egress of undesirable materials into and from the cell, respectively. More particularly, the seal must prevent the electrolyte from passing out of the cell through the seal. A further desirable feature for incorporation into a seal for any cell is a safety vent which will rupture and release the pressure inside the cell when this pressure exceeds a predetermined value.

The problem of provision of a suitable seal for an air-assisted alkaline cell, which seal preferably fulfils all of the above requirements, has been addressed in the prior art. Thus, US-A-5,051,323 describes a polymeric seal for an air-asisted alkaline cell, which seal has holes in it to allow for entry of air. In US-A-3,920,475 a similar system is used, although the seal member consists of a gasket formed from a plastics material, a metal washer and a metal cap in which the holes are present.

The prior art has provided seals which are designed to permit air to enter the cell and to prevent electrolyte from leaving the cell, but none of the prior art addresses the additional problem of providing a seal which can also function as a safety vent.

In view of the above, it would be desirable to produce an air-assisted alkaline cell with a seal which both allows air to enter the cell and prevents electrolyte from leaving the cell, which seal should also provide a safety vent.

It is, therefore, an object of the present invention to provide a seal for an air-assisted cell, which seal may effectively permit air to enter the cell whilst preventing electrolyte from leaving the cell, which seal also functions as a safety vent.

It is another object of the present invention to provide an air permeable seal, functioning also as a safety vent, which seal occupies a minimum space within the cell thereby allowing the maximum volume for the active components of the cell.

It is further object of the present invention to provide a seal and safety vent assembly for an air-assisted cell that is easy to make and cost effective to produce.

The present invention provides an air-assisted alkaline cell having a seal assembly including a seal member so configured as to retain an air-permeable multi-layer plastics film, characterised in that the multi-layer plastics film comprises at least three layers of a plastics material, an inner layer being of a porous plastics material different from and having a higher melting point than the outer layers, said multi-layer plastics film being heat sealed at the periphery thereof by heating the outer layers to their melting point and keeping the inner layer below its melting point, so that the outer layers form an integral bond through the inner layer, and wherein the uppermost outer layer is so configured as to allow an inner layer to expand upwards and outwards.

In a preferred embodiment of the present invention, the seal assembly itself provides a safety vent for the cell.

In accordance with the present invention, the multi-layer plastics film comprises at least three layers of plastics material. The exact number of layers in the film is not essential to the present invention, although the choice of the number of layers may be influenced by the characteristics of the plastics material chosen, for example the thickness of the material and its permeability properties. Generally, we find that a total of three layers is satisfactory, although a multi-layer film comprising two or more inner layers, i.e. a total of four or more layers, is preferred.

The overall thickness of the multi-layer film, and the thicknesses of the individual component layers, depends on various factors, such as the number of layers from which the multi-layer film is formed, the choice of material for the layers and the particular size and cell system employed. The multi-layer film must be sufficiently thick to prevent undesirable materials, such as the electrolyte, from leaving the cell, but its thickness must not be so great that it is unable to rupture when the internal pressure of the cell exceeds a predetermined value.

The thicknesses of the individual component layers may also vary, and it is not essential that these layers are all of the same thickness. It is preferred that the thickness of each of the outer layers of the film varies between 0.5 mil [0.0127 mm] and 6 mils [0.1524 mm], preferably 1 mil [0.0254 mm] to 4 mils [0.1016 mm]. A feature which may influence the thickness of an inner layer may be the ability of such a layer to rupture when the pressure inside the cell exceeds a predetermined value, as a single layer of a certain thickness may be too strong to rupture when the pressure exceeds that value. In such cases, it is generally recommended to use two or more inner layers, each layer being of a lesser thickness than that of a single thick layer, and adding up to the desired thickness. In this multi-layer inner film arrangement, the air flow will be approximately the same as it will be through a single inner layer arrangement, but the rupture will, as discussed above, be considerably less. Generally we prefer that each inner layer is of from 1 mil [0.0254 mm] to 10 mils [0.254 mm] thick, although more preferably, each inner layer is from 3 mils [0.076 mm] to 5 mils [0.127 mm] thick.

In accordance with the present invention, the material from which the outer layers and an inner layer are made are different from each other, and have different melting points. The outer layers both have a higher melting point than an inner layer. Whilst the two outer layers may be made from different plastics materials, it is preferred that these two layers are made from the same material so that successful welding of these films at specific areas will ensure an assembled multi-layer film which is particularly suitable for use as an air-permeable seal in an air-assisted cell. When the two outer layers are made from a different material, it is not essential for these materials to have the same melting point, so long as the melting point of each layer is lower than that of the inner layer(s). It is, however, preferred that these two layers are formed from materials which do have the same melting point. Each outer layer may, if desired, consist of two or more sub-layers, although it is preferred that each outer layer is formed from a single layer.

The inner layer or, when there is more than one inner layer, each inner layer, is made from a different material from the outer layers. When there is more than one inner layer, these inner layers may themselves be made from different materials and these materials may have different melting points. It is preferred, however, that when there is more than one inner layer, the inner layers are made from the same plastics material having the same melting point.

The multi-layer plastics film is formed by heat sealing the layers at the peripheries thereof. Any suitable technique for heat sealing may be used, so long as this only results in sealing at the peripheries of the layers. In general, we find that ultrasonic welding is the most preferred technique.

As mentioned above, it is preferred that the two outer layers are of a material having the same melting point, which melting point is lower than that of an inner layer. In such a situation, heat sealing, e.g. welding, of selected areas results, after cooling, in the formation of an integral bond through the inner layer, i.e. application of heat to the two outer layers at the peripheries thereof will cause those layers to melt and to permeate the inner layer(s) of film at the heated areas. The inner layer(s) will not melt because it will have a higher melting point. In this usage, an integral bond is one which is obtained from the flow of the melted outer layers towards each other, followed by solidification of the melted areas to form a solid unit.

The material from which the layers are made must be air-permeable and, in particular, the inner film must retard penetration of electrolyte, whilst simultaneously permitting air to pass through. The material must also be impermeable to liquids such as the electrolyte used in the cell, for example potassium hydroxide. Whilst a plastics film having only one component layer which is impermeable to electrolyte would fulfil the requirements of the present invention, for example a film in which the inner layer(s) only is so impermeable, it is preferred that each of the layers possesses this characteristic. The inner layer(s) is preferably constructed from a material having a series of interconnected crevices and/or small pores. This construction allows the flow of selected gases and liquids to be controlled, and is also advantageous for the formation of the multi-layer plastics film in that the construction will allow a flowable material, such as the melted material of the two outer layers, to traverse from one side of the inner layer(s) to the other. Because the inner layer(s) has a higher melting point than the outer layers, the pores existing in the structure will not collapse when the multi-layer film is subjected to temperatures which will melt the outer layers.

Plastics materials which are suitable for formation of the outer layers include air-permeable polyalkylenes, particularly polypropylene, and those which are suitable for formation of the inner layer(s) include air-permeable polytetrahaloalkylenes, such as polytetrafluoroethylene. Particularly suitable for the outer layers is the polypropylene film Celgard 4400^{TM}, which is a trademark for a product commercially available from Hoechst Celanese Corp., of Somerville, New Jersey, USA. This product is particularly suitable because it is a polypropylene film made by heat bonding an open mesh of polypropylene, of 3 mils [0.076 mm] thickness, to a solid layer of polypropylene of 1 mil [0.0254 mm] thickness. The open mesh provides structural strength to the film whilst the solid layer is available for bonding to another polypropylene surface.

In accordance with the embodiment of the invention described above, the seal assembly itself provides a safety venting function. It is preferred in this embodiment that the plastics materials from which the multi-layer film is made are so chosen as to allow for rupture if the internal pressure of the cell exceeds a predetermined value. Features which affect this rupture may be, as discussed above, the number and thickness of the individual layers, and the choice of materials. In particular, the selection of the number of inner layers may affect the ability of the film to rupture. When in use, it is generally preferred that the multi-layer film will expand upwards and outwards when the pressure within the cell exceeds a predetermined value, finally rupturing to release that pressure. In an alternative embodiment, the individual layers of the multi-layer film may be so designed as to promote easy rupture under internally abusive conditions. Thus, for example, the top film may include a spoked wheel configuration, a mesh configuration or may be designed to have openings at certain intervals. In each of these designs, the inner film will be able to balloon upwards through the openings in the top film without undue restriction, thereby aiding venting.

In accordance with the present invention, the seal assembly includes a seal member which is so configured as to retain an air-permeable multi-layer plastics film. It is preferred that this seal member is constructed from an organic polymeric material, such as polypropylene. The seal member should also be so configured as to allow the passage of air therethough and this may be achieved, for example, by provision of at least one hole in the seal member.

In a further embodiment, the present invention provides an air-assisted cell comprising the active components of the cell including an electrolyte, all housed within a container closed by a cover having at least one opening, and said cover associated with a seal assembly comprising an organic polymeric seal member having a base with at least one opening and a multi-layer plastic film disposed onto the base, said multi-layer plastic film comprising at least one inner layer of a first plastic film sandwiched between two outer layers of a different type of plastic film with said two outer layers having substantially the same melting temperature and said melting temperature being lower than the melting temperature of the at least one inner layer of the first plastic film; said two outer layers and said at least one inner layer being porous to permit air to pass through with said inner layer preventing the passage of the cell's electrolyte; said multi-layer film heat sealed at least at its peripheral area so that said two outer layers form an integral bond through said inner layer at the peripheral area thereby permitting air to enter through the opening in the cover and through the multi-layer film into the cell and said multi-layer film designed to rupture upon the build up of a predetermined internal pressure.

The seal member is so configured as to retain the multi-layer plastics film. As is demonstrated in the drawings which accompany this application, the multi-layer plastics film may fit inside, or be disposed onto, the seal member. In such an arrangement, the seal member may consist of a substantially flat base surrounding an inner upstanding wall, which wall defines an opening, and a peripheral upstanding skirt. At least one opening in the base should then be present to permit air to flow into the cell. The multi-layer plastics film in this arrangement may have an opening at its centre to accommodate the inner upstanding wall, i.e. so that it could be disposed onto the base member between the inner upstanding wall and the peripheral skirt. The multi-layer film may then, if desired, be physically retained within the seal member, e.g. by use of conventional heat bonding techniques, for example using ultrasonic welding, to bond the peripheries of the film to the walls onto which they abut. In this manner a secured multi-layer film seal member results. We have found that it is particularly advantageous to bond the multi-layer film to the seal member. An alternative method for retaining the multi-layer plastics film in the seal member is the use of an inner top ring of film material bondable to the area near the centrally upstanding wall, as well as a separate outer top ring of film material bondable to the area near the peripheral upstanding skirt. In this manner the inner layer or layers are firmly secured to the organic polymeric seal member. A fatty acid polyamide adhesive, such as the type disclosed in U.S. Patent 3,922,178, may if desired be used to reinforce the weld and to prevent creepage of electrolyte between the seal member and the air-permeable multi-layer film. Yet a further method for this retention is to provide concentric raised inner and outer ridges on the outer wall and/or the base of the seal member, such that the multi-layer plastics film is secured between the ridges.

In order to complete the cell, a neutral cover having at least one opening may be placed over the multi-layer film. An external cover with at least one opening may then be placed over the neutral cover and secured to the container of the cell through the use of the peripheral skirt of the seal memeber.

The cathode in the air-assisted cell of the present invention is suitably made from manganese dioxide, although any other cathode material which is re-chargeable by air during operation of the cell would be appropriate. A good source of highly porous manganese dioxide is the so-called chemically synthesized manganese dioxide or CMD. CMD is usually marketed with a porosity of 25% to 35%. However, CMD may be prepared in the form of spheres with high porosity, for example of approximately 60%. These porous spheres are advantageous in that they have a large surface area which is available for reaction with oxygen in an air-assisted cell. In order to increase the total energy capacity of an air-assisted cell in an air-free environment, substantially solid MnO₂ must be available for the cell reaction. A good source of substantially solid MnO₂ is electrolytically deposited MnO₂, or EMD. EMD may be obtained in the form of dense particles after the electrolytically deposited material is stripped from the electrodes, crushed and screened. EMD has a porosity of approximately 10% - 16% and is, therefore, a substantially solid material. As the ratio of EMD to CMD increases, the air-free capacity of the cell also increases. The amount of CMD and EMD used in the cathode of the cell depends on the desired parameters of the cell with, for example, more or less CMD being used per cathode depending on the energy capacity desired in the presence of air. For a good cell capacity in an air-free environment, and good re-chargeability in an environment containing air, a mixture of 1:5, that is, one part by weight of CMD to five parts by weight of EMD, is preferred.

The invention may be further understood by reference to the accompanying drawings in which:
Fig. 1 is a cross section of an inverted air-assisted alkaline cell according to the present invention;
Fig. 2 is an exploded view of the sub-assembly used in assembling the cell of Fig. 1;
Fig. 2a is a plan view of the air permeable seal member used in the sub-assembly of Fig. 2;
Fig. 3 is a cross section of another embodiment of an inverted air-assisted alkaline cell according to the present invention; and
Fig. 4 is an exploded view of the sub-assembly used in assembling the cell of Fig. 3.

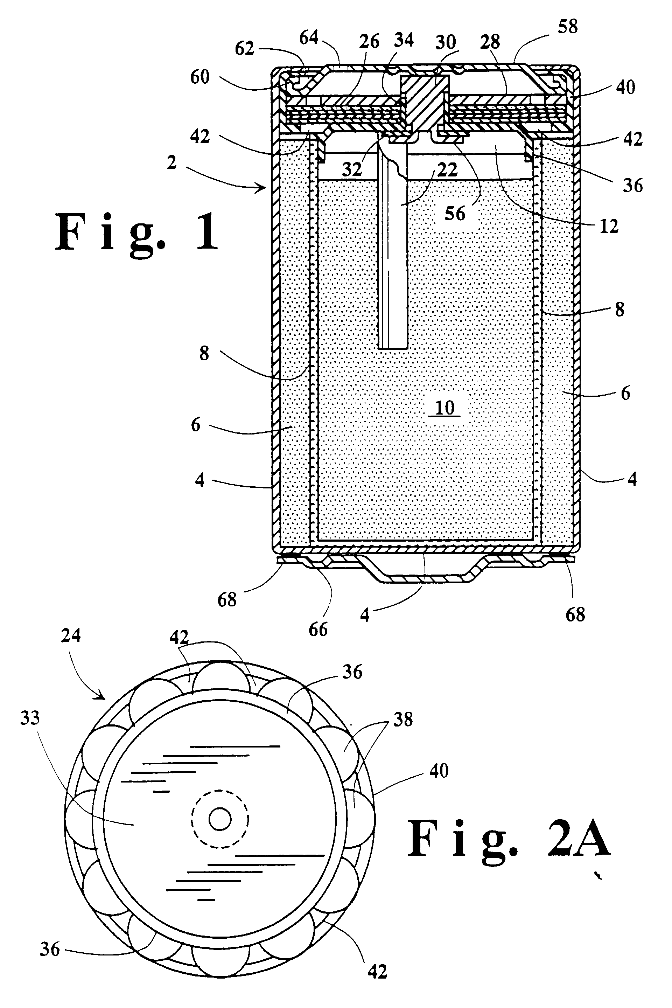

Referring to Fig. 1, the air-assisted alkaline cell 2 is assembled in a conventional conductive steel container 4 which also forms an external terminal for the cell. The cathode 6 for the cell 2 is preferably porous manganese dioxide for example CMD and/or EMD as described above..

After the cathode 6 is formed in the container 4 a separator 8 is added to isolate the anode material 10 physically from the cathode 6 and the container 4, while still permitting ion transport between the electrodes. The anode mix 10 is then added to the separator lined cavity of the cell. The anode mix 10 comprises a mixture of zinc powder, a gel forming binder and a liquid electrolyte used in the cell. The preferred binder is Carbopol 940 which is a carboxy polymethylene polymer available from the B. F. Goodrich Company, of Cleveland, Ohio, USA. The preferred electrolyte is an aqueous solution of potassium hydroxide and is suitably an approximately 34% to 37% by weight solution of potassium hydroxide in water. The electrolyte from the anode mix 10 permeates the separator 8, and the cathode 6. An open area 12 is left in the cell to provide room for expansion of the anode mix 10.

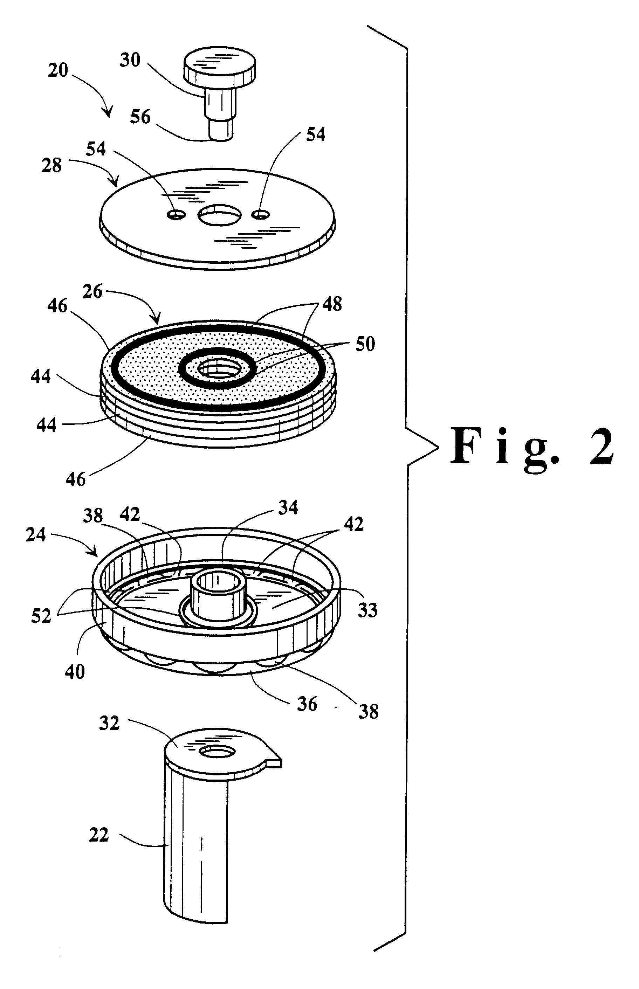

Referring to Figure 2, a sub-assembly, indicated generally by the number 20, is used to close the cell. The sub-assembly 20 consists of an anode current collector 22, a seal member 24, a multi-layer film 26, a neutral cover 28 and a rivet 30 which is used to join the several pieces together. The anode current collector 22 is made from an electrically conducting metal that is inert to the caustic environment within the cell. The metal from which the collector is made is preferably sheet brass. The anode current collector 22 is rolled to have an arcuate shape with a top flat surface 32 which fits tightly against the bottom of the seal member 24. A nail or pin shaped collector would also be suitable.

The seal member 24 is made of an organic polymeric material which is compatible with the components of the cell. The preferred material is polypropylene. The seal member 24 has a substantially flat bottom portion 33 surrounding an inner upstanding wall 34. Below and in line with the periphery of the bottom portion 33 is a substantially circular projecting first wall portion 36. A plurality of circumferentially spaced spokes 38 extend from the periphery of the bottom portion 33 out to and below a peripheral upstanding wall 40 extending upwardly away from bottom portion 33. The open spaces 42 between the spokes 38 provide a passage for air to pass through the seal member 24.

A multi-layer film 26 fits within the area of the seal member 24 bounded by the wall 34 and wall 40. The multi-layer film 26 is made of two layers of polytetrafluoroethylene 44 sandwiched between two layers of an organic polymeric material, such as polypropylene, 46. The multi-layer film 26 is ultrasonically welded at peripheral area 48 and inner area 50 to produce a sealed multi-layer assembly. As stated above, if desired, the top layer 46 could have spaced apart openings to permit the inner film 44 to expand with minimum resistance or restriction. The multi-layer film 26 may be fastened to the bottom 33 and the spokes 38 by welding, if desired. Preferably, the multi-layer film 26 may be disposed onto the bottom 33 and then the layers of the multi-layer film 26 may be secured together and to the bottom 33 and spokes 38 by welding, preferably, ultrasonic welding. A fatty polyamide adhesive may then be used to reinforce the weld and to prevent creepage of electrolyte between the seal member 24 and the air-permeable multi-layer film 26. Two beads of the adhesive, for example, may be used such that one bead is placed around the periphery of the bottom 33 where it joins the inside of peripheral wall 40 and the second bead is placed on the bottom 33 where it joins the inner upstanding wall 34.

To further ensure that the air-permeable multi-layer film 26 stays in position, concentric raised inner and outer ridges 52 may be formed on the bottom 33 of the seal member 24. If desired and although not shown two inner ridges and two outer ridges may be formed on the bottom 33 of seal member 24. The multi-layer film 26 will then be secured between the ridges 52 on the bottom 33 and the neutral cover 28. The vented neutral cover 28 is preferably made of stainless steel and has at least one pair of spaced apertures 54 therein to allow the passage of air into the cell. The vented neutral cover 28 will fit within the area of the seal member 24 bounded by the peripheral wall 40. The rivet 30 is preferably made of brass and has a thinned portion 56 which may be easily spread to bind all of the parts of the sub-assembly 20 together as shown in Figure 1. The dimensions of the several components of the sub-assembly 20 and of the overall cell may be varied to meet the particular size requirements for the type of cell being assembled.

The sub-assembly 20 is inserted into the bottom of the inverted cell as shown in Fig. 1. The wall 36 moves the top edge of the separator 8 toward the cathode material 6. The wall 36 and separator 8 protect the anode mix 10 from contact with the air entering the cell. This avoids the loss of zinc due to direct reaction with oxygen. The peripheral wall 40 of the seal member 24 insulates the neutral cover 28 from electrical contact with the container 4. To complete assembly of the cell, a bottom cover 58 is placed into the steel container 4 and is then electrically insulated from contact with the container 4 by the peripheral wall 40 of seal member 24. The bottom cover 58 makes electrical contact with the rivet 30, or other suitable electrically conductive means, enabling the bottom cover 58 to become the second external terminal for cell 2. The edge of the steel container 4, and of the wall 40 of sub-assembly 20 are then rolled to hold the upturned portion 60 of the bottom cover 58 locked in position on the bottom of the cell 4. A gap 62 surrounds the bottom cover 58, separating it from contact with the container 4. The bottom cover 58 contains three small apertures 64, one of which is shown in Fig. 1, spaced approximately 120° apart, which provide a passage for air to enter into the bottom of the cell 2. The air may pass through the sub-assembly 20 and contact the top portion of the cathode 6 through the air passage 42. The top cover 66 may be fastened to the container by welds 68 after the cathode is rammed into place. It may be added before or after this step as it is merely attached to the container 4.

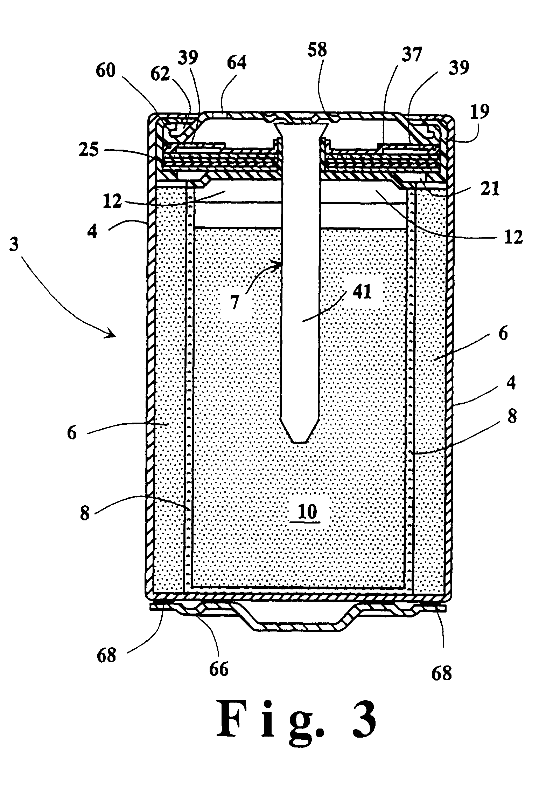

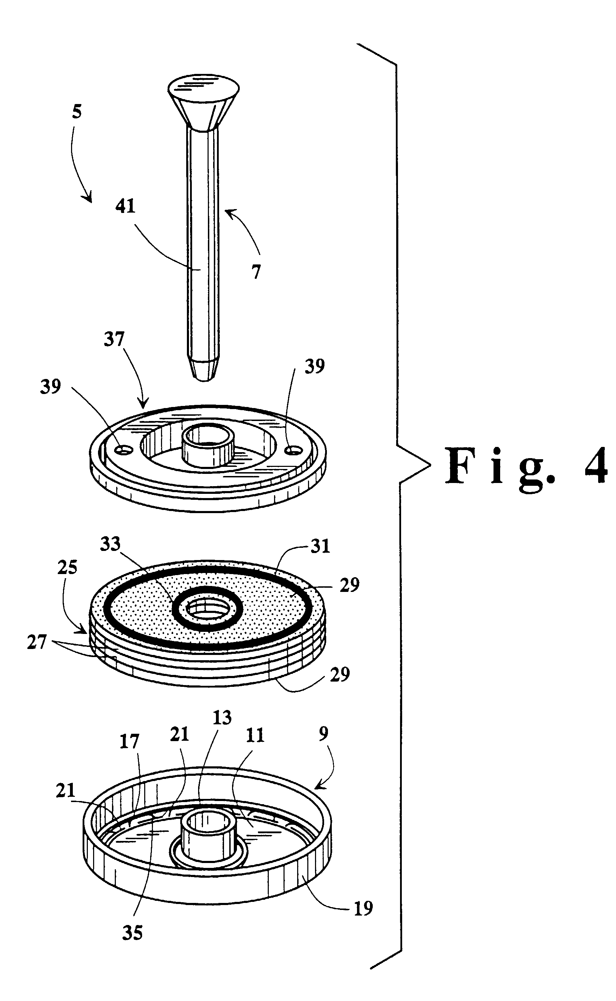

Figs. 3 and 4 show another embodiment of the present invention utilising a seal assembly of a different design. Specifically, Figs. 3 and 4 show an air-assisted alkaline cell 3 that employs several of the same components shown in cell 2 of Fig. 1 and these components are identified with the same reference numbers. A sub-assembly 5 as shown in Fig. 4 is used to close cell 3 as shown in Fig. 3. The sub-assembly 5 consists of an anode current collector nail 7 made from an electronically conducting metal. A seal member 9 is made of an organic polymeric material which is compatible with the components of cell 3, with the preferred material being polypropylene. The seal member 9 has a substantially flat bottom portion 11 surrounding an upstanding inner wall 13.

A plurality of circumferentially spaced spokes 17 extend from the periphery of the bottom portion 11 out to and below a peripheral upstanding wall 19 extending upwardly away from bottom portion 11. The spaces 21 between the spokes 17 provide a passage for air to pass through the seal member 9.

A multi-layer film 25 fits within the area of the seal member 9 bounded by the peripheral wall 19 and inner wall 13. The multi-layer film is made of two layers of polytetrafluoroethylene 27 sandwiched between two layers of an organic polymeric material such as polypropylene 29. The multi-layer film 25 is ultrasonically welded at peripheral area 31 and inner area 33 producing a sealed multi-layer assembly. As stated above, if desired, the top layer 29 could have spaced apart openings to permit the inner film 27 to expand with minimum resistance or restriction. The multi-layer film 25 may be fastened to the bottom 11 and the spokes 17 by welding, if desired, and by use of a fatty acid polyamide adhesive, such as hereinabove described. Two beads of the adhesive may be used. One bead is placed around the periphery of the bottom 11 where it joins the inside of peripheral wall 19 and the second bead may be placed on the bottom 11 where it joins the inner upstanding wall 13. To further ensure that the air-permeable multi-layer film 25 stays in position, concentric raised ridges 35 may be formed on the bottom 11 of the seal 9. The multi-layer film 25 will then be secured between ridges 35 on the bottom 11 and the neutral cover 37. The vented neutral cover 37 is made of stainless steel and has a pair of spaced apertures 39 therein to allow the passage of air into the cell. The vented neutral cover 37 will fit within the area of the seal member 9 bounded by the peripheral wall 19. A conductive nail 7, preferably made of brass and having a thinned portion 41, may be inserted into and through sub-assembly 5 to keep the parts together. The dimensions of the several components of the sub-assembly 5 and of the overall cell may be varied to meet any particular size requirements for the type of cell being assembled.

The sub-assembly 5 is inserted into the bottom of the inverted cell as shown in Fig. 3. The peripheral wall 19 of the seal member 9 insulates the neutral cover 37 from electrical contact with the container 4. To complete assembly of the cell, a bottom cover 58 is placed into the steel container 4 and is also insulated from contact with the container 4 by the peripheral wall 19 of seal member 9. The bottom cover 58 makes electrical contact with the nail 7, or other suitable electrically conductive means, enabling the bottom cover 58 to become the second external terminal for cell 3. The edge of the steel container 4, and of the sub-assembly 5, are then rolled to hold the upturned portion 60 of the bottom cover 58 locked in position on the bottom of the cell 3. A gap 62 surrounds the bottom cover 58, separating it from contact with the container 4. The bottom cover 58 contains three small apertures 64, one of which is shown in Fig. 3, spaced approximately 120° apart, which provide a passage for air to enter into the bottom of the cell 3. The air may pass through the sub-assembly 5 and contact the top portion of the cathode 6 through the air passage 21. The top cover 66 may be fastened to the container by welds 68 after the cathode is rammed into place. It may be added before or after this step as it is merely attached to the container 4.

### EXAMPLE

Several lots of D-size air-assisted alkaline cells (Sample A), constructed in accordance with the present invention and comprising components as illustrated in Figure 1, were tested in storage for leakage. The multi-layer film seal of each cell consisted of two layers of polytetrafluoroethylene film, each 4 mils [0.1016 mm] thick, sandwiched between two layers of polypropylene film, each 4 mils [0.1016 mm] thick. The multi-layer film was ultrasonically welded as described in conjunction with Fig. 1, above. Similar cell lots (Sample B) were produced except that the seals for the cells were made with two layers of polypropylene ultrasonically welded to the polypropylene seal. At 45°C with 90% relative humidity (RH) for 12 weeks, the shelf leakage of the cells of Sample A and Sample B was observed and the results showed that the average leakage for the Sample A cells was 95% less than the average leakage for the Sample B cells. At 37°C with 77% RH for 20 weeks, the average leakage for the Sample A cells was 60% less than the average leakage for the Sample B cells. At 45°C with 50% RH for 12 weeks there was no leakage for the Sample A cells while the Sample B cells had an average leakage of 20%. At 71°C for 8 weeks, there was no leakage for the Sample A cells while the Sample B cells had an average leakage of 50%.

## Claims

1. An air-assisted alkaline cell (2, 3) having a seal assembly (5, 20) including a seal member (9, 24) so configured as to retain an air-permeable multi-layer plastics film (25, 26), characterised in that the multi-layer plastics film (25, 26) comprises at least three layers of a plastics material, an inner layer (27, 44) being of a porous plastics material different from and having a higher melting point than the outer layers (29, 46), said multi-layer plastics film (25, 26) being heat sealed at the periphery thereof by heating the outer layers (29, 46) to their melting point and keeping the inner layer (27, 44) below its melting point, so that the outer layers form an integral bond through the inner layer (27, 44), and wherein the uppermost outer layer is so configured as to allow an inner layer to expand upwards and outwards.

2. A cell (2, 3) according to claim 1 in which the multi-layer plastics film (25, 26) consists of a total of three layers.

3. A cell (2, 3) according to claim 1 in which the multi-layer plastics film (25, 26) consists of a total of four layers.

4. A cell (2, 3) according to any one of claims 1 to 3 in which the outer layers (29, 46) are made from the same material.

5. A cell (2, 3) according to claim 4 in which the outer layers (29, 46) are made from polypropylene.

6. A cell (2, 3) according to any one of claims 1 to 3 in which an inner layer (27, 44) is made from polytetrafluoroethylene.

7. A cell (2, 3) according to any preceding claim in which the outer layers (29, 46) are each of from 0.5 mils [0.0127 mm] to 6 mils [0.1524 mm] thick.

8. A cell (2, 3) according to claim 7 in which each outer layer (29, 46) is from 1 mil [0.0254 mm] to 4 mils ] [0.1016 mm] thick.

9. A cell (2, 3) according to any preceding claim in which an inner layer (27, 44) is from 1 mil [0.0254 mm] to 10 mils [0.254 mm] thick.

10. A cell (2, 3) according to claim 9 in which an inner layer (27, 44) is from 3 mils [0.076 mm] to 5 mils [0.127 mm] thick.

11. A cell (2, 3) according to any preceding claim in which at least an inner layer (27, 44) is impermeable to electrolyte.

12. A cell (2, 3) according to any preceding claim in which the multi-layer plastics film (25, 26) is so configured as to rupture when the internal pressure of the cell (33) exceeds a predetermined value.

13. A cell (2, 3) according to any preceding claim in which the seal member (9, 24) contains a plurality of spaced apart openings in the base thereof.

14. A cell (2, 3) according to any preceding claim in which the multi-layer plastics film (25, 26) is physically retained in the seal member.

15. A cell (2, 3) according to any preceding claim in which the cathode comprises manganese dioxide.

16. An air-assisted cell (2, 3) comprising active components of the cell (2, 3), including an electrolyte, all of which are assembled within a container (4) closed by a cover having at least one opening and said cover associated with a seal assembly (5, 20) comprising an organic polymeric seal member (9, 24) having a base with at least one opening and a multi-layer plastic film (25, 26) disposed onto the base of said seal member (9, 24), said multi-layer plastic film (25, 26) comprising at least one inner layer (27, 44) of a first plastic film sandwiched between two outer layers (29, 46) of a different type of plastic film with said two outer layers (29, 46) having substantially the same melting temperature and said melting temperature being lower than the melting temperature of the at least one inner layer (27, 44) of the first plastic film; said two outer layers and said at least one inner layer (27, 44) being porous to permit air to pass through with said inner layer preventing the passage of electrolyte from the cell (2, 3); said multi-layer film (25, 26) heat sealed at least at its peripheral area so that said two layers form an integral bond through said inner layer at the peripheral area thereby permitting air to pass through the multi-layer film (25, 26) but preventing the cell's electrolyte from passing through.

## Patentansprüche

1. Luftunterstützte alkalische Zelle (2, 3), die eine Dichtungsvorrichtung (5, 20) hat, die ein Dichtungselement (9, 24) einschließt, das so konfiguriert ist, daß es eine luftdurchlässige mehrlagige Kunststoffolie (25, 26) hält, dadurch gekennzeichnet, daß die mehrlagige Kunststoffolie (25, 26) mindestens drei Lagen eines Kunststoffmaterials umfaßt, wobei eine innere Lage (27, 44) aus einem porösen Kunststoffmaterial ist, das sich von dem der äußeren Lagen (29, 46) unterscheidet und einen höheren Schmelzpunkt als diese hat, wobei die mehrlagige Kunststoffolie (25, 26) an ihrem Umfang durch Erhitzen der äußeren Lagen (29, 46) auf ihren Schmelzpunkt und Halten der inneren Lage (27, 44) unter ihrem Schmelzpunkt heißgesiegelt wird, so daß die äußeren Lagen durch die innere Lage (27, 44) hindurch einen integralen Verbund bilden, und bei der die oberste äußere Lage so konfiguriert ist, daß sie die Ausdehnung einer inneren Lage nach oben und außen erlaubt.

2. Zelle (2, 3) nach Anspruch 1, bei der die mehrlagige Kunststoffolie (25, 26) aus einer Gesamtzahl von drei Lagen besteht.

3. Zelle (2, 3) nach Anspruch 1, bei der die mehrlagige Kunststoffolie (25, 26) aus einer Gesamtzahl von vier Lagen besteht.

4. Zelle (2, 3) nach einem der Ansprüche 1 bis 3, bei der die äußeren Lagen (29, 46) aus dem gleichen Material hergestellt werden.

5. Zelle (2, 3) nach Anspruch 4, bei der die äußeren Lagen (29, 46) aus Polypropylen hergestellt werden.

6. Zelle (2, 3) nach einem der Ansprüche 1 bis 3, bei der die innere Lage (27, 44) aus Polytetrafluorethylen hergestellt wird.

7. Zelle (2, 3) nach einem der vorhergehenden Ansprüche, bei der die äußeren Lagen (29, 46) jeweils zwischen 0,5 Milli-Zoll (0,0127 mm) und 6 Milli-Zoll (0,1524 mm) stark sind.

8. Zelle (2, 3) nach Anspruch 7, bei der jede äußere Lage (29, 46) zwischen 1 Milli-Zoll (0,0254 mm) und 4 Milli-Zoll (0,1016 mm) stark ist.

9. Zelle (2, 3) nach einem der vorhergehenden Ansprüche, bei der eine innere Lage (27, 44) zwischen 1 Milli-Zoll (0,0254 mm) und 10 Milli-Zoll (0,254 mm) stark ist.

10. Zelle (2, 3) nach Anspruch 9, bei der eine innere Lage (27, 44) zwischen 3 Milli-Zoll (0,076 mm) und 5 Milli-Zoll (0,127 mm) stark ist.

11. Zelle (2, 3) nach einem der vorhergehenden Ansprüche, bei der wenigstens eine innere Lage (27, 44) für den Elektrolyten undurchlässig ist.

12. Zelle (2, 3) nach einem der vorhergehenden Ansprüche, bei der die mehrlagige Kunststoffolie (25, 26) so konfiguriert ist, daß sie reißt, wenn der Innendruck der Zelle (33) einen festgelegten Wert übersteigt.

13. Zelle (2, 3) nach einem der vorhergehenden Ansprüche, bei der das Dichtungselement (9, 24) in seiner Basis eine Vielzahl von im Abstand zueinander angeordneten Öffnungen enthält.

14. Zelle (2, 3) nach einem der vorhergehenden Ansprüche, bei der die mehrlagige Kunststoffolie (25, 26) räumlich in dem Dichtungselement gehalten wird.

15. Zelle (2, 3) nach einem der vorhergehenden Ansprüche, bei der die Kathode Mangandioxid umfaßt.

16. Luftunterstützte Zelle (2, 3), die aktive Komponenten der Zelle (2, 3) umfaßt, einschließlich eines Elektrolyten, die alle innerhalb eines Behälters (4) angeordnet sind, der durch einen Deckel geschlossen wird, der wenigsten eine Öffnung hat, und wobei dem Deckel eine Dichtungsvorrichtung (5, 20) zugeordnet ist, die ein organisches polymeres Dichtungselement (9, 24) umfaßt, das eine Basis mit wenigstens einer Öffnung und eine mehrlagige Kunststoffolie (25, 26) hat, die auf der Basis des Dichtungselements (9, 24) angeordnet ist, wobei die mehrlagige Kunststoffolie (25, 26) wenigstens eine innere Lage (27, 44) aus einer ersten Kunststoffolie umfaßt, die zwischen zwei äußere Lagen (29, 46) eines unterschiedlichen Typs von Kunststoffolie geschoben ist, die im wesentlichen dieselbe Schmelztemperatur haben und wobei die Schmelztemperatur niedriger als die Schmelztemperatur der wenigstens einen inneren Lage (27, 44) der ersten Kunststoffolie ist; wobei die beiden äußeren Lagen und die wenigstens eine innere Lage (27, 44) porös sind, um den Durchgang von Luft durch diese zu ermöglichen, wobei die innere Lage den Durchtritt von Elektrolyt aus der Zelle (2, 3) verhindert; wobei die mehrlagige Kunststoffolie (25, 26) zumindest an ihrem Umfangsbereich heißgesiegelt ist, so daß die beiden Lagen am Umfangsbereich durch die innere Lage hindurch einen integralen Verbund bilden, um so den Durchgang von Luft durch die mehrlagige Folie (25, 26) zu ermöglichen, den Austritt des Elektrolyten der Zelle aber zu verhindern.

## Revendications

1. Cellule alcaline assistée par l'air (2, 3) comportant un assemblage d'étanchéité (5, 20) englobant un élément d'étanchéité (9, 24), configuré de sorte à retenir un film multicouche en plastique perméable à l'air (25, 26), caractérisée en ce que le film multicouche en plastique (25, 26) comprend au moins trois couches d'une matière plastique, une couche interne (27, 44) étant composée d'une matière plastique poreuse, différente de celle des couches externes et dont le point de fusion est supérieur à celui des couches externes (29, 46), ledit film multicouche en plastique (25, 26) étant thermosoudé au niveau de sa périphérie en chauffant les couches externes (29, 46) à leur point de fusion et en maintenant la couche interne (27, 44) au-dessous de son point de fusion, de sorte que les couches externes forment une liaison intégrale par l'intermédiaire de la couche interne (27, 44), la couche externe la plus élevée étant configurée de sorte à permettre la dilatation d'une couche interne vers le haut et vers l'extérieur.

2. Cellule (2, 3) selon la revendication 1, dans laquelle le film multicouche en plastique (25, 26) consiste en un total de trois couches.

3. Cellule (2, 3) selon la revendication 1, dans laquelle le film multicouche en plastique (25, 26) consiste en un total de quatre couches.

4. Cellule (2, 3) selon l'une quelconque des revendications 1 à 3, dans laquelle les couches externes (29, 46) sont composées de la même matière.

5. Cellule (2, 3) selon la revendication 4, dans laquelle les couches externes (29, 46) sont composées de polypropylène.

6. Cellule (2, 3) selon l'une quelconque des revendications 1 à 3, dans laquelle une couche interne (27, 44) est composée de polytétrafluoréthylène.

7. Cellule (2, 3) selon l'une quelconque des revendications précédentes, dans laquelle les couches externes (29, 46) ont chacune une épaisseur comprise entre 0,5 millième de pouce [0,0127 mm] et 6 millièmes de pouce [0,1524 mm].

8. Cellule (2, 3) selon la revendication 7, dans laquelle chaque couche externe (29, 46) a une épaisseur comprise entre 1 millième de pouce [0,0254 mm] et 4 millièmes de pouce [0,1016 mm].

9. Cellule (2,3) selon l'une quelconque des revendications précédentes, dans laquelle une couche interne (27, 44) a une épaisseur comprise entre 1 millième de pouce [0,0254 mm] et 10 millièmes de pouce [0,254 mm].

10. Cellule (2, 3) selon la revendication 9, dans laquelle une couche interne (27, 44) a une épaisseur comprise entre 3 millièmes de pouce [0,076 mm] et 5 millièmes de pouce [0,127 mm].

11. Cellule (2, 3) selon l'une quelconque des revendications précédentes, dans laquelle au moins une couche interne (27, 44) est imperméable à l'électrolyte.

12. Cellule (2, 3) selon l'une quelconque des revendications précédentes, dans laquelle le film multicouche en plastique (25, 26) est configuré de manière à se rompre lorsque la pression interne de la cellule (33) dépasse une valeur prédéterminée.

13. Cellule (2, 3) selon l'une quelconque des revendications précédentes, dans laquelle l'élément d'étanchéité (9, 24) contient plusieurs ouvertures espacées à sa base.

14. Cellule (2, 3) selon l'une quelconque des revendications précédentes, dans laquelle le film multicouche en plastique (25, 26) est physiquement retenu dans l'élément d'étanchéité.

15. Cellule (2, 3) selon l'une quelconque des revendications précédentes, dans laquelle la cathode comprend du dioxyde de manganèse.

16. Cellule assistée par l'air (2, 3) comprenant des composants actifs de la cellule (2, 3) englobant un électrolyte, tous étant assemblés à l'intérieur d'un récipient (4) fermé par un couvercle comportant au moins une ouverture, ledit couvercle étant associé à un assemblage d'étanchéité (5, 20), comprenant un élément d'étanchéité en polymère organique (9, 24), comportant une base dans laquelle est pratiquée au moins une ouverture, et un film multicouche en plastique (25, 26) disposé sur la base dudit élément d'étanchéité (9, 24), ledit film multicouche en plastique (25, 26) comprenant au moins une couche interne (27, 44) d'un premier film en plastique, intercalé entre deux couches externes (29, 46) d'un type différent de film en plastique, lesdites deux couches externes (29, 46) ayant pratiquement la même température de fusion et ladite température de fusion étant inférieure à la température de fusion de la au moins une couche interne (27, 44) du premier film en plastique; lesdites deux couches externes et ladite au moins une couche interne (27, 44) étant poreuses pour permettre à l'air de passer à travers elles, ladite couche interne empêchant le passage de l'électrolyte à partir de la cellule (2, 3); ledit film multicouche (25, 26) étant thermosoudé au moins sur sa zone périphérique, de sorte que lesdites deux couches forment une liaison intégrale par l'intermédiaire de ladite couche interne dans la zone périphérique, permettant ainsi à l'air de traverser le film multicouche (25, 26), mais empêchant l'électrolyte de la cellule de le traverser.
